# EUROPEAN PATENT SPECIFICATION

(11) **EP 2 992 754 B1**
(45) Date of publication and mention of the grant of the patent: **16.01.2019**
(21) Application number: 15183687.1
(22) Date of filing: 03.09.2015
(51) Int. Cl.: A01G 18/00, A01G 18/20

(54) **METHOD FOR PROCESSING CASING SOIL**
VERFAHREN ZUR VERARBEITUNG VON DECKERDE
PROCEDE DE TRAITEMENT DE SOL DE TUBAGE

(30) Priority: 05.09.2014 NL 2013419; 30.04.2015 NL 2014741
(43) Date of publication of application: 09.03.2016
(73) Proprietor: Van den Boomen, Henricus Nicolaas Cornelis, 5421 CN Gemert (NL); Van den Boomen, Johannes Maria Franciscus, 5421 XC Gemert (NL)
(72) Inventor: Van den Boomen, Henricus Nicolaas Cornelis, 5421 CN Gemert (NL); Van den Boomen, Johannes Maria Franciscus, 5421 XC Gemert (NL)
(74) Representative: Algemeen Octrooi- en Merkenbureau B.V.

(56) References cited:
- EP-A1- 2 455 357
- WO-A1-2012/101213
- WO-A1-2013/108196
- GB-A- 2 166 633
- NL-C- 2 009 402
- US-A- 4 978 501

## Description

The present invention relates to a method for processing casing soil used in the cultivation of mushrooms using a culture medium. The present invention further relates to the use of casing soil as obtained by carrying out the present method.

A mushroom farm in principle needs two elements for growing mushrooms: colonised compost, also referred to as culture medium, and casing soil. Colonised compost contains the necessary nutrients for the mushroom. Suitable sources for the culture medium are, for example, horse manure with straw, poultry manure and lime. Casing soil, usually consisting of a mixture of different types of peat and spent lime (a by-product from the sugar industry) provides the supply of water to the culture medium, prevents dehydration of the culture medium and provides an advantageous environment in which mushrooms can form buttons. The casing soil is preferably free of pathogenic organisms and has the correct structure, it must have a pH of about 7.5 and be capable of retaining moisture. The bacteria that live in the casing soil stimulate the mycelium to produce the mushrooms; without these bacteria, no mushrooms will grow, so that good casing soil is paramount in the cultivation of mushrooms.

Generally a layer of about 35 cm of colonised compost or culture medium is provided in the growing beds. On the layer of colonised compost, a layer of about 4.5 cm of casing soil is provided. From the compost, mycelium threads grow into the casing soil. The threads form small buttons here, which in turn grow out into fully grown mushrooms, after which harvesting can begin. In the mushroom growing industry, a harvesting period is indicated by the specialist term "flush". A mushroom farmer harvests two or three flushes per bed.

Mushroom compost or colonised compost is the culture medium for growing mushrooms and is usually composed of manure, such as horse manure with straw, poultry manure and lime. The mushroom compost is colonised with mycelium. Usually a layer of peat is placed on top of the mushroom compost, which layer functions as casing soil for the purpose of maintaining an optimum moisture content while the mushrooms are growing.

In current-day practice, spent mushroom compost, i.e. mushroom compost which becomes available after the mushrooms have been harvested, is discharged as fertilizer, whether or not generally together with the casing soil placed on the mushroom compost for cultivating the mushrooms. A drawback of discharging spent mushroom compost as fertiliser is that the product has limited added value and that, moreover, the transport costs are high.

From International application WO 2014/116114 there is known a method for composting spent mushroom compost under conditions for providing composted spent mushroom compost with a dry matter content of 45% to 90%, which method includes a step of separating the spent mushroom compost from the casing soil prior to the composting of the spent mushroom compost. Said International application WO 2014/116114 further discloses that the casing soil is dried, using heat obtained by composting the spent mushroom compost. Such casing soil is used as potting compost or manure concentrate.

From Dutch patent No. 194986 there is known a method for processing mushroom feet by removing the mushroom feet from the bed in which the mushrooms are grown, followed by the steps of cutting, drying and mechanically separating the remaining casing soil therefrom.

From Dutch publication NL 2009402 there is known a device for automatically separating the casing soil and the compost upon clearing of a bed after a flush, wherein the bed is passed under the auger in use and the auger housing is rotatable about the longitudinal axis of the auger and relative to the frame.

From European patent application EP 2 455 357 there is known a method for treating mushroom compost, comprising the steps of supplying the compost to be treated to a first separator, such as a screen, so as to obtain a first fraction comprising smaller compost particles, and a second fraction comprising larger compost particles, partially removing water from the larger compost particles, colouring said partially dried material using a colorant material, and further removing water from the coloured material so as to obtain thus treated compost.

From International application WO 2012/101213 there is known a method for recycling used mushroom casing soil comprising mushroom waste residue, which method comprises the steps of a) providing used mushroom casing soil comprising mushroom waste residue, and b) reducing the mean particle size of the mushroom waste residue to a mean particle size smaller than 6 mm, thereby providing reduced mushroom casing soil.

From International application WO 2013/108196 there is known a method for preparing casing soil for use in the cultivation of mushrooms, wherein a number of starting materials are thoroughly mixed and separated into fractions having different particle sizes.

From British publication GB 2 166 633 and US patent US 4,978,501 there is known a method for continuous sterilisation of moist horticultural material, wherein the material to be treated is passed through a tunnel where it is exposed to radio frequency electromagnetic waves.

From a scientific article by FARSI, M. et al.; "Recycling of mushroom peat casing soil through a plastic mesh"; Proceedings of the 7th International Conference on Mushroom Biology and Mushroom Products (ICMBMP7) 4-7 October 2011, Arcachon, France, pp.. 428-431 there is known a method for cultivating mushrooms wherein culture medium is separated from the casing soil, using a layer of perforated plastic, during the cultivation process. After the mushrooms have been harvested, the spent casing soil is separated from the culture medium together with the plastic, after which the casing soil is stored for three weeks. The thus stored casing soil is then brought into contact with distilled water for the purpose of restoring the electric conductivity thereof to a desired level, whereupon the casing soil thus treated is subjected to pasteurisation at 60 °C in preparation of its reuse in a mushroom cultivation process.

From Dutch laid-open publication NL 760562- there is known a litter for stables, which litter consists of sawdust, peat and, if necessary, an odoriferous oil.

One aspect of the present invention is to provide of a method for reprocessing the casing soil used in the cultivation of mushrooms into reusable residual materials in an environmentally-friendly and efficient manner.

Another aspect of the present invention is to provide of a method for processing casing soil, which casing soil is used in the cultivation of mushrooms on a culture medium, wherein the spent casing soil is subjected to further treatment so as to prepare it for new use.

Another aspect of the present invention is to provide of a method for processing casing soil, which casing soil is used in the cultivation of mushrooms using a culture medium, wherein the amount of the harmful substances present in the casing soil is reduced to a minimum.

The present invention thus relates to a method for processing casing soil as disclosed by the combination of features of claim 1.

The present inventors have found that one or more of the above objects is/are achieved by carrying out the above steps. Due to the use of the aforesaid method, the thus treated casing soil is suitable for use as an animal litter, also referred to as floor covering. The phrase "separating the culture medium from the casing soil" is to be understood to refer to the situation after the cultivation of mushrooms in the casing soil has already taken place. The casing soil to be subjected to step i) can thus be regarded as the already "spent" casing coil. Separating the culture medium from the casing soil can for example take place using means that are already generally known for this purpose, for example fixed knives, rotary knives and rotary screw conveyors. Inevitably, the dimensions of the residual mushroom products still present in the casing soil, in particular the mushroom feet, will be reduced during such a separating operation.

In the present method as described above, the term "casing soil" is understood to mean the top layer provided on the mushroom compost in particular for regulating the moisture content. The term "casing soil" can thus comprise a combination of raw materials, but in practice it is usually composed on the basis of peat, betacal filter (spent lime) and marl. The use of the aforesaid method makes it possible to minimise the amount of the harmful bacteria (gender, type) present in the casing soil, in which regard inter alia Escherichia (E. coli), Salmonella (S. typhi), Klebsiella (K. pneumonia) and Enterobacter (E. enterogenes) are to be considered, as a result of which the treated casing soil thus obtained is suitable, among other purposes, for use as animal litter, also referred to as floor covering.

According to the invention, the casing soil, after being separated from the culture medium, is stored before the material is subjected to a drying treatment. As a result of such storage or "rest" of the casing soil, the mushroom feet still present in the casing soil will shrivel. Said storage takes place for a period of 1 - 20 days, in particular at a temperature ranging from 0 - 35 °C, preferably 5 - 20 °C. According to the invention the casing soil is turned over during such a period of storage. The term "turning over" is to be understood to include the working up, ploughing up or rooting up of the casing soil, which will speed up the process of shrivelling of the mushroom feet still present in the casing soil. The present inventors have surprisingly found that the residual products present in the casing soil after the cultivation of mushrooms has been stopped, in particular mycelium and mushroom feet, have an adverse effect as regards the special use of the end product. By allowing the casing soil to "mature" for some time after the cultivation of mushrooms, such residual products in the casing soil will decompose in a natural manner. Storing the casing soil can thus be regarded as a form of "rest" of the casing soil, as a result of which the mushroom feet and mycelium threads that are still present in the casing soil will shrivel. The present inventors have found that such residual products will hardly disappear, if at all, upon being subjected to a steam treatment, pasteurisation or other heat treatment, so that it is desirable that a storage step be carried out. After such a storage step has been carried out, the casing soil thus treated can be further processed according to the present method so as to obtain the intended end product.

According to the invention, no addition of solids and/or liquids to the casing soil takes place during the time the casing soil is stored. Such additions can adversely affect the process of shrivelling of the mushroom feet that are still present in the casing soil. It is preferable, therefore, that no contact with a liquid selected from water and distilled water takes place. The present inventors have furthermore found that it is preferable not to subject the casing soil to a pasteurisation treatment before step ii) is carried out, in particular not to subject the casing soil to a pasteurisation treatment after step ii) has been carried out. Such a pasteurisation treatment has been found not to be necessary for reusing the casing soil thus treated in accordance with the present invention, as will be explained yet hereinafter.

In a special embodiment of the present method it is desirable that the casing soil be subjected to a reducing step prior to the drying treatment. Such a reducing step is preferable because the casing soil has a slightly compact and set structure after the mushrooms have been cultivated thereon, which is considered to be disadvantageous to the drying treatment. Such a reducing step can therefore be regarded as a homogenisation step, in particular as regards the particle size of the casing soil. In particular an unimpeded transport of exiting moisture through the layer of casing soil is of major importance in that regard, and the reducing step enables the exiting moisture to flow through the entire bed of casing soil.

According to the invention, the drying treatment is carried out to a dry matter content of 20-70 wt.%, in particular 20-60 wt.%, preferably 30-50 wt.%, calculated on the basis of the total weight of the dried material. The present inventors have found that a dry matter content higher than the aforesaid upper limit will lead to undesirable dust formation of the end product. A dry matter content lower than the aforesaid lower limit will lead to a sticky end product, which is undesirable. Drying is a mass transfer process which consists of the removal of water or moisture through evaporation from solid matter. In the most frequent case, a gas flow is used, for example air, which discharges the vapour as moisture. Other possibilities for drying include vacuum drying, tumble drying, dielectric drying (using microwaves), freeze drying, supercritical drying (using superheated steam), and drying by means of natural air. The reduction of the water content can also be carried out by centrifuging, for example. Drying preferably takes place by using a hot air flow.

In the method according to the present invention it is furthermore possible to add one or more additives, preferably selected from the group consisting of lime, phosphorous and nitrogen, to the casing soil, preferably after the drying treatment. Such additives serve to prepare the treated casing soil for a particular use. This is for example done by adding lime so as to adjust the acidity. An example is to use ground eggshells as the lime additive, which additive also contains other components, such as zinc, in addition to a high percentage of lime.

In a special embodiment of the present invention it is desirable that a heat treatment be carried out by passing through steam, preferably for a period of 1 - 20 hours, especially preferably 6 - 14 hours, before the drying treatment according to step ii) takes place.

In the aforesaid treatment it is preferable that the temperature of the material that has been subjected to the aforesaid heat treatment is at least 58 °C. In the heat treatment it is in particular desirable that the amount of Klebsiella (K. pneumoniae) be reduced to a minimum, in which regard it is preferable that the temperature of the material to be subjected to the heat treatment is at least 58 °C.

It is also possible to subject the casing soil to a reducing step after the drying treatment. Such a reducing step results in any lumps or chunks of casing soil being separated from each other so as to thus obtain a slightly homogenous casing soil. Such a reducing step can therefore also be regarded as a homogenisation step, in particular as regards the particle size of the casing soil.

The present invention in particular relates to the use of casing soil obtained by carrying out the above-described method as animal litter, in particular for horses, cattle, pigs and/or poultry. Another use of the casing soil obtained by carrying out the above-described method is as a potting compost component.

In a special embodiment it is desirable that the casing soil be mixed with one or more additives selected from the group consisting of coconut residue, sawdust, straw, flax and hemp. The use of such a mixture may for example be desirable from the viewpoint of the moisture-absorbing capacity.

In a special embodiment of the present invention it is desirable that one or more steps of the present method be carried out in same space where the cultivation of the mushrooms takes place.

The present inventors have been able to determine the effect of the storage period on the amount of residual products in the casing soil is shown. At the moment when the storage period begins, the amount of residual products is about 25 wt.%, about 20 wt.% being mushroom feet and about 5 wt.% being mycelium, based on the total weight of the casing soil. It has been found that the total amount of residual products in the casing soil rapidly decreases all of a sudden after a storage period of at least 5 days. A storage period of more than 16 days did not result in a significant reduction of the amount of residual products in the casing soil. The storage period related to an ambient temperature of 15 °C.

The present invention will now be explained by means of an example, which example must by no means be construed as being limitative.

### Example

A culture medium (amount: 26,000 kg) was separated after the harvesting of mushrooms into 19,760 kg of spent mushroom compost and 6,240 kg of casing soil. The casing soil was carried off and stored at a temperature of 15 °C for a week. After said period of rest, large chunks were mechanically removed from the casing soil so as to obtain particles having a particle size of about 1-10 mm. The casing soil thus treated was dried to a dry matter content of 40 wt.%, calculated on the basis of the total weight of the dried material, which was done by passing through hot air. After the drying treatment, the dried material was prepared for use as animal litter, in particular for horses, cattle, pigs and/or poultry. The dried material was also suitable for use as a potting compost component. The casing soil thus treated can be mixed with an additive yet.

## Claims

1. A method for processing casing soil used in the cultivation of mushrooms using a culture medium, the method comprises the following steps:
i) separating the culture medium from the casing soil,
ii) storing the casing soil, after being separated from the culture medium, for shriveling mushroom feet present in said casing soil, wherein said storage takes place for a period of 1-20 days at a temperature ranging from 0-35 °C, and
iii) subjecting the casing soil obtained in step ii) to a drying treatment, wherein said drying treatment is carried out to a dry matter content of 20-70 wt.%, calculated on the basis of the total weight of the dried material,
**characterised in that** during said storage period said casing soil is turned over and no addition of solids and/or liquids to the casing soil takes place during the time the casing soil is stored.

2. A method according to claim 1, **characterised in that** said storage takes place at a temperature ranging from 5 - 20 °C.

3. A method according to claim 1, **characterised in that** no contact with a liquid selected from water and distilled water takes place.

4. A method according to any one or more of the preceding claims, **characterised in that** the casing soil is not subjected to a pasteurisation treatment before step ii) is carried out.

5. A method according to any one or more of the preceding claims, **characterised in that** the casing soil is not subjected to a pasteurisation treatment after step iii) has been carried out.

6. A method according to any one or more of the preceding claims, **characterised in that** the casing soil is subjected to a reducing step before the drying treatment according to step iii) is carried out.

7. A method according to any one or more of the preceding claims, **characterised in that** the casing soil is subjected to a reducing step after the drying treatment according to step iii).

8. A method according to any one or more of the preceding claims, **characterised in that** the drying treatment according to step iii) is carried out to a dry matter content of 20 - 60 wt.%, preferably 30 - 50 wt.%, calculated on the basis of the total weight of the dried material.

9. A method according to claim 8, **characterised in that** the method further comprises the step of adding one or more additives, preferably selected from the group consisting of lime, phosphorous and nitrogen, to the casing soil, preferably after the drying treatment.

10. A method according to any one or more of the preceding claims, **characterised in that** a heat treatment is carried out by passing through steam, preferably for a period of 1 - 20 hours, especially preferably 6 - 14 hours, before the drying treatment according to step iii) takes place.

11. A method according to claim 10, **characterised in that** the temperature of the material subjected to the aforesaid heat treatment is at least 58 °C.

12. Use of casing soil as obtained by carrying out the method according to any one of the preceding claims as animal litter, in particular for horses, cattle, pigs and/or poultry, wherein preferably the casing soil is mixed with an additive selected from coconut residue, sawdust, straw, flax and hemp.

13. Use of casing soil as obtained by carrying out the method according to any one of the preceding claims 1-11 as a potting compost component, wherein preferably the casing soil is mixed with an additive selected from coconut residue, sawdust, straw, flax and hemp.

## Patentansprüche

1. Verfahren zum Verarbeiten von Deckerde, die bei der Kultivierung von Pilzen unter Verwendung eines Kulturmediums verwendet wird, wobei das Verfahren die folgenden Schritte umfasst:
i) Trennen des Kulturmediums von der Deckerde,
ii) Aufbewahren der Deckerde nach dem Trennen vom Kulturmedium zum Schrumpfen von in der Deckerde vorhandenen Pilzfüßen, wobei die Aufbewahrung über einen Zeitraum von 1-20 Tagen bei einer Temperatur im Bereich von 0-35 °C erfolgt, und
iii) Unterziehen der in Schritt ii) erhaltenen Deckerde einer Trocknungsbehandlung, wobei die Trocknungsbehandlung bis zu einem Trockenmassegehalt von 20-70 Gew.-%, berechnet auf der Basis des Gesamtgewichts des getrockneten Materials, erfolgt,
**dadurch gekennzeichnet, dass** die Deckerde während des Aufbewahrungszeitraums umgedreht wird und keine Zugabe von Feststoffen und/oder Flüssigkeiten zur Deckerde während der Zeit die Deckerde wird Aufbewahrt erfolgt.

2. Verfahren nach Anspruch 1, **dadurch gekennzeichnet, dass** die Aufbewahrung bei einer Temperatur im Bereich von 5-20 °C erfolgt.

3. Verfahren nach Anspruch 1, **dadurch gekennzeichnet, dass** kein Kontakt mit einer Flüssigkeit, ausgewählt aus Wasser und destilliertem Wasser, erfolgt.

4. Verfahren nach einem oder mehreren der vorangehenden Ansprüche, **dadurch gekennzeichnet, dass** die Deckerde keiner Pasteurisierungsbehandlung vor Durchführung von Schritt ii) unterzogen wird.

5. Verfahren nach einem oder mehreren der vorangehenden Ansprüche, **dadurch gekennzeichnet, dass** die Deckerde keiner Pasteurisierungsbehandlung nach Durchführung von Schritt iii) unterzogen wird.

6. Verfahren nach einem oder mehreren der vorangehenden Schritte, **dadurch gekennzeichnet, dass** die Deckerde einem Reduktionsschritt vor Durchführung der Trocknungsbehandlung gemäß Schritt iii) unterzogen wird.

7. Verfahren nach einem oder mehreren der vorangehenden Ansprüche, **dadurch gekennzeichnet, dass** die Deckerde einem Reduktionsschritt nach Durchführung der Trocknungsbehandlung gemäß Schritt iii) unterzogen wird.

8. Verfahren nach einem oder mehreren der vorangehenden Ansprüche, **dadurch gekennzeichnet, dass** die Trocknungsbehandlung gemäß Schritt iii) bis zu einem Trockenmassegehalt von 20-60 Gew.-%, vorzugsweise 30-50 Gew.-%, berechnet auf der Basis des Gesamtgewichts des getrockneten Materials, erfolgt.

9. Verfahren nach Anspruch 8, **dadurch gekennzeichnet, dass** das Verfahren ferner den Schritt des Zugebens von einem oder mehreren Zusatzstoffen, vorzugsweise ausgewählt aus der Gruppe bestehend aus Kalk, Phosphor und Stickstoff, zur Deckerde, vorzugsweise nach der Trocknungsbehandlung, umfasst.

10. Verfahren nach einem oder mehreren der vorangehenden Ansprüche, **dadurch gekennzeichnet, dass** eine Wärmebehandlung vorzugsweise über einen Zeitraum von 1-20 Stunden, insbesondere vorzugsweise 6-14 Stunden, vor Durchführung der Trocknungsbehandlung gemäß Schritt iii) erfolgt, indem Dampf durchgeleitet wird.

11. Verfahren nach Anspruch 10, **dadurch gekennzeichnet, dass** die Temperatur des der zuvor genannten Wärmebehandlung unterzogenen Materials wenigstens 58 °C beträgt.

12. Verwendung von Deckerde, die durch Durchführung des Verfahrens nach einem der vorangehenden Ansprüche erhalten wird, als Tierstreu, insbesondere für Pferde, Rinder, Schweine und/oder Geflügel, wobei die Deckerde vorzugsweise mit einem Zusatzstoff gemischt wird, ausgewählt aus Kokosnussresten, Sägemehl, Stroh, Flachs und Hanf.

13. Verwendung von Deckerde, die durch Durchführung des Verfahrens nach einem der vorangehenden Ansprüche 1-11 erhalten wird, als Anzuchterdkomponente, wobei die Deckerde vorzugsweise mit einem Zusatzstoff gemischt wird, ausgewählt aus Kokosnussresten, Sägemehl, Stroh, Flachs und Hanf.

## Revendications

1. Procédé de traitement de terre de gobetage utilisée dans la culture de champignons en utilisant un milieu de culture, le procédé comprend les étapes suivantes qui consistent :
i) à séparer le milieu de culture de la terre de gobetage,
ii) à stocker la terre de gobetage, après avoir été séparée du milieu de culture, pour ratatiner les pieds de champignons présents dans ladite terre de gobetage, où ledit stockage a lieu pendant une période allant de 1 à 20 jour(s) à une température se trouvant dans la plage allant de 0 à 35°C, et
iii) à soumettre la terre de gobetage obtenue à l'étape ii) à un traitement de séchage, où ledit traitement de séchage est réalisé jusqu'à obtenir une teneur en matière sèche allant de 20 à 70% en poids, calculée par rapport au poids total du matériel séché,
**caractérisé en ce que** pendant ladite période de stockage, ladite terre de gobetage est retournée et aucun ajout de solides et/ou de liquides à la terre de gobetage n'a lieu pendant le temps durant lequel la terre de gobetage est stockée.

2. Procédé selon la revendication 1, **caractérisé en ce que** ledit stockage a lieu à une température se trouvant dans la plage allant de 5 à 20°C.

3. Procédé selon la revendication 1, **caractérisé en ce qu'**aucun contact avec un liquide choisi parmi l'eau et l'eau distillée n'a lieu.

4. Procédé selon l'une quelconque ou plusieurs des revendications précédentes, **caractérisé en ce que** la terre de gobetage n'est pas soumise à un traitement de pasteurisation avant la réalisation de l'étape ii).

5. Procédé selon l'une quelconque ou plusieurs des revendications précédentes, **caractérisé en ce que** la terre de gobetage n'est pas soumise à un traitement de pasteurisation après la réalisation de l'étape iii).

6. Procédé selon l'une quelconque ou plusieurs des revendications précédentes, **caractérisé en ce que** la terre de gobetage est soumise à une étape de réduction avant la réalisation du traitement de séchage selon l'étape iii).

7. Procédé selon l'une quelconque ou plusieurs des revendications précédentes, **caractérisé en ce que** la terre de gobetage est soumise à une étape de réduction après le traitement de séchage selon l'étape iii).

8. Procédé selon l'une quelconque ou plusieurs des revendications précédentes, **caractérisé en ce que** le traitement de séchage selon l'étape iii) est réalisé jusqu'à obtenir une teneur en matière sèche allant de 20 à 60% en poids, de préférence allant de 30 à 50% en poids, calculée par rapport au poids total du matériel séché.

9. Procédé selon la revendication 8, **caractérisé en ce que** le procédé comprend en outre l'étape qui consiste à ajouter un ou plusieurs additif(s), de préférence choisi(s) dans le groupe constitué par la chaux, le phosphore et l'azote, à la terre de gobetage, de préférence après le traitement de séchage.

10. Procédé selon l'une quelconque ou plusieurs des revendications précédentes, **caractérisé en ce qu'**un traitement thermique est réalisé par passage à travers de la vapeur d'eau, de préférence pendant une période allant de 1 à 20 heure(s), de manière particulièrement préférée allant de 6 à 14 heures, avant que le traitement de séchage selon l'étape iii) n'ait lieu.

11. Procédé selon la revendication 10, **caractérisé en ce que** la température du matériel soumis au traitement thermique susmentionné est d'au moins 58°C.

12. Utilisation de la terre de gobetage telle qu'obtenue en réalisant le procédé selon l'une quelconque des revendications précédentes comme litière pour animaux, en particulier pour les chevaux, les bovins, les porcs et/ou les volailles, où de préférence la terre de gobetage est mélangée avec un additif choisi parmi les résidus de noix de coco, la sciure, la paille, le lin et le chanvre.

13. Utilisation de la terre de gobetage telle qu'obtenue en réalisant le procédé selon l'une quelconque des revendications précédentes 1 à 11 comme composant de terreau de rempotage, où de préférence la terre de gobetage est mélangée avec un additif choisi parmi les résidus de noix de coco, la sciure, la paille, le lin et le chanvre.
